# EUROPEAN PATENT SPECIFICATION

(11) **EP 4 402 786 B1**
(45) Date of publication and mention of the grant of the patent: **25.03.2026**
(21) Application number: 21777489.2
(22) Date of filing: 13.09.2021
(51) Int. Cl.: H02M 1/36, H02M 7/483, H02M 1/00

(54) **CHARGING OF A MODULAR MULTILEVEL CONVERTER**
LADEN EINES MODULAREN MULTILEVELUMRICHTERS
CHARGE D'UN CONVERTISSEUR MULTINIVEAU MODULAIRE

(43) Date of publication of application: 24.07.2024
(73) Proprietor: Hitachi Energy Ltd, 8050 Zürich (CH)
(72) Inventor: HASLER, Jean-Philippe, 722 44 Västerås (SE)
(74) Representative: AWA Sweden AB
(86) International application number: PCT/EP2021/075100
(87) International publication number: WO 2023/036446

(56) References cited:
- EP-A1- 2 988 404
- WO-A1-2021/052547

## Description

### Technical field

The present disclosure relates to modular multilevel converters (MMCs). In particular, the present disclosure relates to (pre-)charging of such MMCs before connecting to a power grid.

### Background

A modular multilevel converter (MMC) includes various semiconductor devices (such as e.g. IGBTs or other switching devices) along with electronic control equipment for controlling such semiconductor devices. To power the electronic control equipment, energy is usually taken from capacitors in the converter cells of the converter valves of the MMC. As a result, the capacitors must be charged to a sufficient charging level before the electronic control equipment may assume control of the semiconductor devices and of the converter, and before the converter may start operating as intended when connected to an electric grid.

The (pre-)charging of the capacitors may be implemented by providing power from a power supply such as e.g. the electric grid (to which the converter is, or is to be, connected) itself or from an auxiliary power supply (such as a generator, in cases where the electric grid is not readily available for the charging). In order to prevent high inrush currents during the charging of the capacitors, a converter valve may be connected to the power supply via a charging resistor. To reduce losses, such a resistor is usually paired with a disconnector, such that the resistor may be bypassed once the charging is complete.

During charging of the capacitors, the converter is normally operated in a blocking mode, wherein all semiconductor devices (or switches) in the converter cells are opened such that current may only pass through the accompanying freewheeling diodes of the converter cells. Such a passive charging process is often slow, and it may be the case that once the charging is completed, the capacitor voltages are still not high enough such that a low-cost disconnector may be used to bypass the resistor. A subsequent boosting of the capacitor voltages is therefore required before the resistor may be bypassed.

EP 2 988 404 A1 discloses a charging process for a Modular Multilevel Converter (MMC). WO 2021/052547 A1 discloses a method for synchronizing a grid-side harmonic filter and pre-charging cell capacitors in an MMC.

### Summary

It is therefore a goal of the present disclosure to provide a method of pre-charging a modular multilevel converter (MMC), in which method such a boosting of the capacitor voltages is obtained with minimal effort.

To achieve this goal, the present disclosure provides a method of pre-charging an MMC, an MMC arrangement and a converter station as defined by the independent claims. Further embodiments are provided in the dependent claims.

According to a first aspect of the present disclosure, a method of pre-charging a modular multilevel converter (MMC) is provided. According to a second aspect of the present disclosure, an MMC arrangement is provided. According to a third aspect, a converter station including at least one such MMC is provided.

In all aspects of the present disclosure, the MMC includes at least one converter valve. The at least one converter valve includes a plurality of converter cells, and each such converter cell includes a capacitor. The MMC further includes a valve control unit. The valve control unit is configured to at least, during a normal operation phase when the MMC is connected to an electric grid via a normal, first current flow path, modulate the converter to synthesize a voltage waveform which at least approximates a voltage reference. The MMC may for example operate to transfer power between e.g. an AC electric grid and a DC electric grid (i.e. operate as an inverter and/or rectifier). The MMC may for example be or form part of a STATCOM providing reactive power to e.g. an AC electric grid, or be configured to perform other tasks for which an MMC is normally suited.

The MMC itself, or an arrangement of which the MMC forms part, may further include control means. The control means may be configured to make the MMC and/or the arrangement perform a method as will now be described.

The method may include interrupting the normal (first) current flow path between the MMC and the electric grid. This may for example be achieved by using connection/disconnection means included within the MMC and/or within the arrangement, and configured to selectively close and interrupt the normal current flow path between the MMC and the electric grid. At least when the normal current flow path is interrupted, the connection/disconnection means may provide an alternative, second current flow path between the MMC and a power source. The power source may for example have a peak voltage magnitude which is equal to or lower than a peak voltage magnitude of the electric grid, which would allow e.g. an auxiliary generator to be used even though the rated peak voltage magnitude of this generator is less than that of the grid itself.

The method may further include pre-charging, via the alternative (second) current flow path, the capacitors in the converter cells of the converter valve to a first voltage level. A magnitude of the first voltage level may be below the peak voltage magnitude of the electric grid. This pre-charging may however provide a sufficient charging level for the converter cell capacitors in order to power the various control equipment in the MMC, such as e.g. the valve control unit. To not pre-charge beyond the first voltage level magnitude may avoid having to wait for a longer time before activating e.g. the valve control unit, and/or to avoid needing a power source having a larger voltage output (i.e. equal to or even larger than the magnitude of the electric grid).

After reaching the first voltage level, the method may include setting the voltage reference to a finite voltage having a magnitude which is lower than the peak voltage magnitude of the power source and thereby, using the valve control unit, boosting the capacitors in the converter cells of the converter valve to a second voltage level. A magnitude of the second voltage level may be at least equal to or higher than the peak voltage magnitude of the electric grid.

After reaching the second voltage level, the method may include resuming the normal operation phase by closing the normal current flow path between the MMC and the electric grid.

As will be described in more detail later herein, using the valve control unit to boost the converter cell capacitors may increase their voltage level to at least that of the electric grid. As both the MMC and the electric grid are then at an approximately same voltage level, the MMC may be reconnected to the electric grid while avoiding large inrush currents and/or other issues normally faced when opening/closing a current path between two terminals having large voltage differences. By using the already existing valve control unit, the boosting of the capacitors may be achieved without a need for additional equipment, and with small implementation efforts. Likewise, the use of an already implemented control algorithm, namely that used to modulate the converter during the normal operation phase, avoids the need for a special, more complex algorithm specifically dedicated to boosting of the converter cell capacitors.

In some embodiments, the finite voltage to which the voltage reference is set may be approximately 80% of the peak voltage magnitude of the power source or less. The "boosting current" provided during the boosting of the capacitors may correspond to the selected voltage reference in such a way that a lower (but still finite) voltage reference leads to a higher boosting current, and vice versa. A higher boosting current may provide a reduction of the time needed for the capacitors to reach their desired level of charge (i.e. to reach the desired second voltage level). Setting the voltage reference to approximately 80% of the peak voltage magnitude of the power source may provide a desired trade-off between boosting speed and current handling capability.

In some embodiments, the voltage reference may for example be a sine wave, and the finite voltage may be a magnitude of this sine wave.

The power source the electric grid itself, and/or an auxiliary power supply such as for example a voltage generator or similar. As mentioned earlier herein, the power source may provide sufficient energy to start the control equipment (such as the valve control unit) of the semiconductors (e.g. one or more IGBTs or similar) within the MMC. It is envisaged that the power source may for example be an AC power source (such as an AC grid, or an auxiliary AC generator), or that the power source may for example be a DC power source (such as e.g. an auxiliary DC generator).

In some embodiments, a current limiting resistor may be provided in the alternative current flow path. Such a current limit resistor may for example help to avoid large inrush/outrush currents through the alternative current flow path when connected to the power source (such as e.g. the electric grid and/or the auxiliary power supply).

In some embodiments, a disconnector, switch or breaker may be provided in order to interrupt the normal current flow path. It is envisaged also that the same disconnector, switch or breaker may be used to close the normal current flow path, and also to bypass or even interrupt the alternative current flow path once the main current flow path has been closed again (in order to resume the normal operation phase/state of the MMC). As the main current flow path is only closed again once the voltage potential at both the MMC and the electric grid are approximately the same, the requirements of the disconnector, switch or breaker, and thereby also its cost and/or size, may be reduced.

The least one converter valve is blocked (using e.g. control means included in the MMC) before the boosting of the capacitors.

Further objects and advantages of the various embodiments of the present disclosure will be described below by means of exemplifying embodiments.

Examples and embodiments will be described below with reference to the accompanying drawings, in which:
Figure 1a schematically illustrates a modular multilevel converter, MMC, arrangement according to one or more embodiments of the present disclosure;
Figure 1b schematically illustrates one example of a connection/disconnection means according to one or more embodiments of the present disclosure;
Figure 1c schematically illustrates another example of a connection/disconnection means according to one or more embodiments of the present disclosure; and
Figure 2 schematically illustrates a flowchart of method of pre-charging an MMC according to one or more embodiments of the present disclosure.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the figures, the sizes of elements and regions may be exaggerated for illustrative purposes and, thus, are provided to illustrate the general structures of the embodiments.

### Detailed description

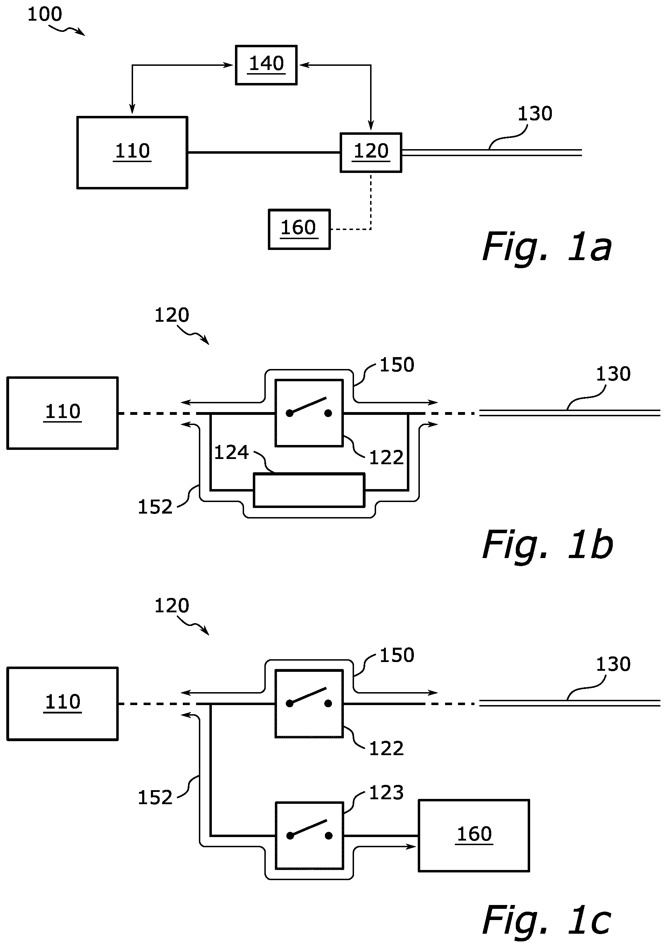

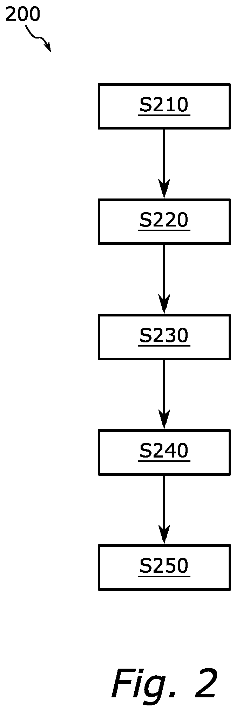

With reference to Figures 1a, 1b, 1c and 2, the concept of the present disclosure will now be described in more detail.

Figure 1a illustrates schematically an example of a modular multilevel converter (MMC) arrangement 100 according to one or more example embodiments of the present disclosure. The arrangement 100 includes an MMC 110, which is connected via connection/disconnection means 120 to an electric grid 130. The arrangement 100 also includes control means 140 (including e.g. a valve control unit), which are configured to control e.g. the connection/disconnection means 120 and various functions of the MMC 110 itself. The control means 140 may for example be a separate unit from the MMC 110, or the control means 140 may be an integrated part of the MMC 110. It is also envisaged that the control means 140 may be split, such as for example some functionality is included within the MMC 110 (such as for example the valve control unit), and some functionality is included as a separate unit (e.g. functionality for controlling the connection/disconnection means 120), as required. As indicated by the dashed line, and as will be described further below, an optional power source 160 may also be connected via the connection/disconnection means 120.

Figure 1b illustrates schematically one example of a connection/disconnection means 120, including a switching element 122 and a current limiting resistor 124 connected in parallel with the switching element 122. When the switching element 122 is closed, the connection/disconnection means 120 provides a main (i.e. a first) current flow path 150 between the MMC 110 and the electric grid 130. When the switching element 122 is opened, the connection/disconnection means 120 provides an alternative (i.e. a second) current flow path 152 between the MMC 110 and the electric grid 130, via the current limiting resistor 124. By providing the alternative current flow path 152, converter cell capacitors in the MMC 110 may be pre-charged from the electric grid 130 via the current limiting resistor 124 while the current limiting resistor 124 helps to avoid large inrush currents. Once, as will be described later herein, the voltage levels of the converter cell capacitors are sufficient, the current limiting resistor 124 may be bypassed by closing the switching element 122, such that the current limiting resistor 124 does not consume any power (i.e. in the form of resistive heating) during normal operation of the MMC 110 once it is reconnected to the electric grid 130 via the main current flow path 150. In this configuration, the power source referred to earlier is the electric grid 130 itself. Here, and in other embodiments, the electric grid 130 may for example be an AC grid. Although not illustrated in the Figures, the main current flow path may also include other equipment, such as one or more transformers and/or one or more additional switching elements, as needed.

Figure 1c illustrates schematically another embodiment of connection/disconnection means 120. In this example, two switching elements 122 and 123 are included, and configured such that if the switching element 122 is closed, a main (i.e. a first) current flow path 150 is provided between the MMC 110 and the electric grid 130. Also, if the switching element 122 is opened while the switching element 123 is closed, an alternative (i.e. a second) current flow path 152 is provided between the MMC 110 and a power source 160. Here, the power source 160 is not the electric grid 130, but instead for example an auxiliary power source such as e.g. a generator or similar. Although illustrated as two separate switching elements 122 and 123, it may of course also be envisaged that only one switching element, such as e.g. a single-pole, double-throw type of switching element, is used, which may selectively route a current to/from the MMC 110 from/to either one of the electric grid 130 and the power source 160 in order to selectively provide the main and alternative current flow paths 150 and 152.

Herein, an auxiliary power source is not necessarily an AC source, and it is envisaged that also a DC power source (such as e.g. an auxiliary DC generator) connected on the AC-side of the MMC 110 may be used for charging of the capacitors.

Herein, it is envisaged that the switching element 122 may be any type of element which may interrupt a current flowing through the main current flow path 150, and instead divert such a current to flow through the alternative current flow path 152. Examples of such switching elements include e.g. disconnectors, switches and/or breakers.

Although not illustrated in Figures 1a-1c, it is envisaged that the MMC includes at least one converter cell arm, which includes a plurality of converter cells connected in series, where each converter cell includes a capacitor (or other energy storage) and also switching means for at least either bypassing or inserting the capacitor into a current path through the converter valve. It is further envisaged that the MMC 100 is arranged such that current provided via the connection/disconnection means 120 may be used to charge the capacitors as described herein. Herein, a capacitor being bypassed/inserted may also be referred to as said capacitor being disconnected/connected. The exact configuration of the MMC 100 is not limited to e.g. an inverter or rectifier, but it is envisaged also that the MMC 100 may be e.g. a delta- or star/wye-connected STATCOM or similar.

Now, with reference also to Figure 2, a method of pre-charging the capacitors within the MMC 110 will be described in more detail.

Figure 2 illustrates schematically a flowchart of a method 200 of pre-charging an MMC according to one or more embodiments of the present disclosure. In the method 200, a first step S210 includes interrupting the normal (i.e. first) current flow path between the MMC 110 and the electric grid. It is here also envisaged a situation when the MMC 110 has never been connected to the electric grid 130 before, and that the pre-charging is performed as a way of connecting the MMC 110 to the electric grid 130 for the first time. The normal current flow path 150 between the MMC 110 and the electric grid 130 may for example be interrupted by opening the switching element 122.

A second step S220 includes providing an alternative (i.e. second) current flow path 152 between the MMC 110 and a power source (such as e.g. the electric grid 130, and/or the auxiliary power source 160). If the power source is the electric grid 130, the alternative current flow path 152 may for example include the current limiting resistor 124. It is here envisaged that the power source has for example a peak voltage magnitude which is equal to or lower than a peak voltage magnitude of the electric grid 130. Of course, if the electric grid 130 is used as the power source, the voltages will be the same.

A third step S230 includes pre-charging, via the alternative current flow path 152, the capacitors in the converter cells of the converter valve (of the MMC 110) to a first voltage level V₁, which is below the peak voltage magnitude Vₙₒₘ of the electric grid 130. Once the first voltage level V₁ has been reached, the method 200 may proceed with a fourth step S240.

The fourth step S240 includes setting the voltage reference V_{ref} to a finite voltage V_{fin} which is lower than the peak voltage magnitude Vₙₒₘ of the electric grid and, using the valve control unit, boost the capacitors in the converter cells of the converter valve to a second voltage level at least equal to or higher than the peak voltage magnitude of the electric grid. The step S240 will now be described in more detail.

The valve control unit is normally, during a normal operation phase of the MMC 110, used to synthesize a waveform which at least approximately matches that of the voltage reference V_{ref}. This is achieved by selectively bypassing and inserting the various capacitors of the converter cells such that their combined voltages matches the desired output voltage. If the desired output voltage is an AC voltage, the valve control unit may for example insert fewer capacitors while the AC voltage is closer to zero, and insert more capacitors while the AC voltage is closer to a peak value. If the converter cells are of a more advanced type, such as e.g. a full-bridge converter cell, the valve control unit may also select with which polarity each capacitor is to be inserted, giving more possible configurations in terms of how to insert/bypass the capacitors. In summary, it may be envisaged that if the valve control unit is given a voltage reference which is lower, a smaller number of capacitors will be inserted. If the valve control unit is given a voltage reference which is higher, a larger number of capacitors will be inserted. In order to balance the voltages of the capacitors (such that, on average, each capacitor receives/discharges the same amount of total charge), the valve control unit cycles between which capacitors that are inserted during which time, such that all capacitors are discharged and charged equally over time.

Now, as envisaged by the present disclosure, the same control mechanism may be used to boost the voltages of the capacitors to a voltage which is at least equal to or even higher than a peak voltage magnitude of a power source (such as e.g. the grid or an auxiliary power source). This may include first blocking the converter valve, and then provide a (fixed) voltage reference value whose magnitude is lower than the peak voltage magnitude. By so doing, the valve control unit will only connect a lower number of capacitors than would be needed to output a voltage equal to the peak voltage magnitude. As a result, the lower number of capacitors will be exposed to a voltage magnitude (i.e. the peak voltage magnitude of the power source) which is higher than their initial combined voltage magnitude, and their combined voltage magnitude will thus be increased/charged such that it eventually reaches that of the peak voltage magnitude of the power source. Using a much simplified example, it may be understood that if given a plurality of N batteries each having an initial voltage magnitude of 5 volts, the highest voltage magnitude that may be output by these N batteries is 5*N, which will occur if the valve control unit decides to insert all of the N batteries at the same time by providing a voltage reference equal to 5*N. Now, before deciding on whether to insert or disconnect each battery, it may be assumed that a voltage equal to 5*N volts is already provided to the converter (which is assumed to include the N batteries), and that the voltage reference is set to a value lower than the provided voltage, e.g. to 4*N volts. As a result, the valve control unit may decide to insert only 4*N/5 batteries at the same time (which would provide an output of the desired 4*N volts, as each battery would initially contribute 5 volts). However, as these 4*N/5 batteries are now exposed to the applied voltage of 5*N volts, each of the inserted batteries will be charged until each individual charge reaches 5*N/(4*N/5) = 25/4 volts. As this is higher than the initial 5 volt per battery, the batteries will thus be boosted to a value approximately 25% higher than the initial 5 volts. By keeping the number of batteries that are inserted at a same time to 4*N/5, but by alternating between several configurations of exactly which 4*N/5 out of the total N batteries that are inserted at each time, all of the batteries may be boosted as described above. Thus, as envisaged by the present disclosure, the valve control unit and a same method as normally used for inserting/disconnecting the capacitors to output a voltage matching a desired voltage reference, but with the voltage reference configured such that it is less than a peak voltage magnitude of the power source, may be used to achieve a boosting of the capacitors to a combined voltage magnitude which is at least equal to or even higher than the peak voltage magnitude of the power source.

After reaching the second voltage level magnitude, the method 200 may proceed to a next step S250, including resuming the normal operation phase by closing the normal current flow path between the MMC and the electric grid.

The envisaged method 200 thereby reduces the need to pre-charge beyond the first voltage level magnitude, and may avoid having to wait for a longer time before activating e.g. the valve control unit, and/or to avoid needing a power source having a larger voltage output (i.e. equal to or even larger than the magnitude of the electric grid). Once such a boosting has been achieved, normal operation of the MMC may be resumed by closing the normal current flow path between the MMC and the grid, and thereby reaching the goal set out in the beginning of the section "Summary".

Although not illustrated in any drawings, it is envisaged by the present disclosure to also provide a converter station, which includes at least one MMC arrangement as described herein.

In summary, the present disclosure thus envisages an MMC arrangement and a method of controlling the same wherein more complex methods of cell DC voltage boosting are avoided, but wherein already existing control methods (such as those used by a valve control unit during normal operation of the MMC) are used in a new way in order to, with little additional effort and with low maintenance effort, boost a voltage of the MMC cell capacitors before the MMC may be (re-)connected to a power grid. By boosting the capacitors to a voltage which matches or is even greater than that of e.g. a grid to which the MMC is to be (re-)connected, the present disclosure provides a way of avoid the use of more complex and expensive disconnector devices which would otherwise be needed if the voltage difference between the grid and the MMC was larger.

Although features and elements may be described above in particular combinations, each feature or element may be used alone without the other features and elements or in various combinations with or without other features and elements.

Additionally, variations to the disclosed embodiments may be understood and effected by the skilled person in practicing the claimed invention, from a study of the drawings, the disclosure, and the appended claims. In the claims, the words "comprising" and "including" does not exclude other elements, and the indefinite article "a" or "an" does not exclude a plurality. The mere fact that certain features are recited in mutually different dependent claims does not indicate that a combination of these features cannot be used to advantage.

## Claims

1. A method (200) of pre-charging a modular multilevel converter, MMC (100),
wherein the MMC includes at least one converter valve including a plurality of converter cells each including a capacitor; and a valve control unit (140) configured to at least, during a normal operation phase when the MMC is connected to an electric grid (130) via a normal, first current flow path (150), modulate the converter to synthesize a voltage waveform at least approximating a voltage reference by selectively bypassing and inserting the various capacitors of the converter cells such that their combined voltages matches the voltage reference,
the method including:
interrupting (S210) the first current flow path between the MMC and the electric grid;
providing (S220) an alternative, second current flow path (152) between the MMC and a power source (130, 160), wherein the power source is the electric grid and/or an auxiliary power supply;
pre-charging (S230), via the second current flow path, the capacitors in the converter cells of the converter valve to a first voltage level below a peak voltage magnitude of the electric grid but sufficient to power the valve control unit;
after reaching the first voltage level, first blocking the at least one converter valve and then setting (S240) the voltage reference to a finite voltage having a magnitude lower than the peak voltage magnitude of the power source and thereby, using the valve control unit, boosting the capacitors in the converter cells of the converter valve to a second voltage level having a magnitude at least equal to or higher than the peak voltage magnitude of the power source, wherein the valve control unit (140) is configured to only connect a lower number of capacitors than would be needed to output a voltage equal to the peak voltage magnitude, such that said lower number of capacitors is exposed to a voltage magnitude which is higher than their initial combined voltage magnitude; and,
after reaching the second voltage level magnitude, resuming (S250) the normal operation phase by closing the first current flow path between the MMC and the electric grid.

2. The method of claim 1, wherein the finite voltage of the voltage reference is approximately 80% of the peak voltage magnitude of the power source or less.

3. The method of claim 1 or 2, wherein the voltage reference is a sine wave, and wherein the finite voltage is a peak voltage magnitude of said sine wave.

4. The method of any one of the preceding claims, including providing a current limiting resistor (124) in the second current flow path.

5. The method of any one of the preceding claims, including providing a disconnector, switch or breaker (122) in order to interrupt the first current flow path.

6. A modular multilevel converter, MMC, arrangement (100), including:
an MMC (110) having at least one converter valve including a plurality of converter cells connected in series, each converter cell including a capacitor and switching means for at least either bypassing or inserting said capacitor into a current path through the converter valve, and a valve control unit (140) configured to at least, during a normal operation phase when the MMC is connected to an electric grid (130) via a normal, first current flow path (150), modulate the plurality of converter cells by controlling the switching means to synthesize a voltage waveform at least approximating a voltage reference by selectively bypassing and inserting the various capacitors of the converter cells such that their combined voltages matches the voltage reference;
connection/disconnection means (120) configured to selectively close and interrupt the first current flow path between the MMC and an electric grid and, at least when the first current flow path is interrupted, provide an alternative, second current flow path (152) between the MMC and a power source (130, 160), wherein the power source is the electric grid and/or an auxiliary power generator, and
control means (140) configured to:
interrupt the first current flow path between the MMC and the electric grid using said connection/disconnection means;
pre-charge, via the second current flow path, the capacitors in the converter cells of the converter valve to a first voltage level below a peak voltage magnitude of the electric grid but still sufficient to power the valve control unit;
after reaching the first voltage level, first block the at least one converter valve and then set the voltage reference to a finite voltage lower than a peak voltage magnitude of the power source and thereby, using the valve control unit, boost the capacitors in the converter cells of the converter valve to a second voltage level at least equal to or higher than the peak voltage magnitude of the power source wherein the valve control unit (140) is configured to only connect a lower number of capacitors than would be needed to output a voltage equal to the peak voltage magnitude, such that said lower number of capacitors is exposed to a voltage magnitude which is higher than their initial combined voltage magnitude; and,
after reaching the second voltage level, resume the normal operation phase by closing the first current flow path between the MMC and the electric grid using said connection/disconnection means.

7. The MMC arrangement of claim 6, wherein the magnitude of the finite voltage of the voltage reference is approximately 80% of the peak voltage magnitude of the power source or less.

8. The MMC arrangement of claim 6 or 7, wherein the voltage reference is a sine wave, and wherein the finite voltage is a peak voltage magnitude of said sine wave.

9. The MMC arrangement of any one of claims 6 to 8, wherein the second current flow path includes a current limiting resistor (124).

10. The MMC arrangement of any one of claims 6 to 9, wherein the second current flow path includes a disconnector, switch or breaker (122).

11. A converter station, including at least one modular multilevel converter, MMC, arrangement according to any one of claims 6 to 10.

## Patentansprüche

1. Verfahren (200) zum Vorladen eines modularen Multilevel-Umrichters, MMC, (100),
wobei der MMC mindestens ein Umrichterventil enthält, das eine Vielzahl von Umrichterzellen beinhaltet, die jeweils einen Kondensator enthalten; und eine Ventilsteuereinheit (140), die dazu ausgelegt ist, während einer normalen Betriebsphase, in der der MMC über einen normalen, ersten Stromflusspfad (150) mit einem elektrischen Netz (130) verbunden ist, den Umrichter zumindest zu modulieren, um eine Spannungswellenform zu synthetisieren, die sich zumindest einer Spannungsreferenz annähert, indem die verschiedenen Kondensatoren der Umrichterzellen selektiv umgangen und eingefügt werden, so dass ihre kombinierten Spannungen mit der Spannungsreferenz übereinstimmen,
wobei das Verfahren Folgendes beinhaltet:
Unterbrechen (S210) des ersten Stromflusspfades zwischen dem MMC und dem elektrischen Netz;
Bereitstellen (S220) eines alternativen zweiten Stromflusspfades (152) zwischen dem MMC und einer Stromquelle (130, 160), wobei die Stromquelle das elektrische Netz und/oder eine Hilfsstromversorgung ist;
Vorladen (S230), über den zweiten Stromflusspfad, der Kondensatoren in den Umrichterzellen des Umrichterventils auf einen ersten Spannungspegel unterhalb einer Spitzenspannungsgröße des elektrischen Netzes, aber ausreichend, um die Ventilsteuereinheit mit Strom zu versorgen;
nach Erreichen des ersten Spannungspegels, zunächst Sperren des mindestens einen Umrichterventils und dann Einstellen (S240) der Spannungsreferenz auf eine endliche Spannung, die eine Größe hat, die niedriger als die Spitzenspannungsgröße der Stromquelle ist, und dadurch,
unter Verwendung der Ventilsteuereinheit, Verstärken der Kondensatoren in den Umrichterzellen des Umrichterventils auf einen zweiten Spannungspegel, der eine Größe hat, die mindestens gleich oder höher als die Spitzenspannungsgröße der Stromquelle ist, wobei die Ventilsteuereinheit (140) ausgelegt ist, nur eine geringere Anzahl von Kondensatoren zu verbinden, als erforderlich wäre, um eine Spannung auszugeben, die gleich der Spitzenspannungsgröße ist, so dass die geringere Anzahl von Kondensatoren einer Spannungsgröße ausgesetzt ist, die höher ist als ihre anfängliche kombinierte Spannungsgröße;
und,
nach Erreichen der zweiten Spannungspegelgröße, Wiederaufnehmen (S250) der normalen Betriebsphase durch Schließen des ersten Stromflusspfades zwischen dem MMC und dem elektrischen Netz.

2. Verfahren nach Anspruch 1, wobei die endliche Spannung der Spannungsreferenz ungefähr 80 % der Spitzenspannungsgröße der Stromquelle oder weniger beträgt.

3. Verfahren nach Anspruch 1 oder 2, wobei die Spannungsreferenz eine Sinuswelle ist, und wobei die endliche Spannung eine Spitzenspannungsgröße der Sinuswelle ist.

4. Verfahren nach einem der vorhergehenden Ansprüche, das Bereitstellen eines Strombegrenzungswiderstands (124) in dem zweiten Stromflusspfad beinhaltet.

5. Verfahren nach einem der vorhergehenden Ansprüche, das Bereitstellen eines Trenners, Schalters oder Unterbrechers (122) beinhaltet, um den ersten Stromflusspfad zu unterbrechen.

6. Modulare Multilevel-Umrichter-(MMC)-Anordnung (100), die Folgendes aufweist:
einen MMC (110) mit mindestens einem Umrichterventil, das mehrere in Reihe geschaltete Umrichterzellen enthält, wobei jede Umrichterzelle einen Kondensator und eine Schalteinrichtung zum Umgehen oder Einfügen des Kondensators in einen Strompfad durch das Umrichterventil enthält, und eine Ventilsteuereinheit (140), die dazu ausgelegt ist, während einer normalen Betriebsphase, in der der MMC über einen normalen, ersten Stromflusspfad (150) mit einem elektrischen Netz (130) verbunden ist, die Vielzahl von Umrichterzellen zumindest durch Steuern der Schalteinrichtung zu modulieren, um eine Spannungswellenform zu synthetisieren, die sich zumindest einer Spannungsreferenz annähert, indem die verschiedenen Kondensatoren der Umrichterzellen selektiv umgangen und eingefügt werden, so dass ihre kombinierten Spannungen mit der Spannungsreferenz übereinstimmen;
Verbindungs-/Trennungseinrichtung (120), die dazu ausgelegt ist, den ersten Stromflusspfad zwischen dem MMC und einem elektrischen Netz selektiv zu schließen und zu unterbrechen und, zumindest wenn der erste Stromflusspfad unterbrochen ist, einen alternativen zweiten Stromflusspfad (152) zwischen dem MMC und einer Stromquelle (130, 160) bereitzustellen, wobei die Stromquelle das elektrische Netz und/oder ein Hilfsstromgenerator ist, und
Steuereinrichtung (140), die für Folgendes ausgelegt ist:
Unterbrechen des ersten Stromflusspfades zwischen dem MMC und dem elektrischen Netz unter Verwendung der Verbindungs-/Trennungseinrichtung;
Vorladen, über den zweiten Stromflusspfad, der Kondensatoren in den Umrichterzellen des Umrichterventils auf einen ersten Spannungspegel unterhalb einer Spitzenspannungsgröße des elektrischen Netzes, aber noch ausreichend, um die Ventilsteuereinheit mit Strom zu versorgen;
nach Erreichen des ersten Spannungspegels, zunächst Sperren des mindestens einen Umrichterventils und dann Einstellen der Spannungsreferenz auf eine endliche Spannung, die niedriger als eine Spitzenspannungsgröße der Energiequelle ist, und dadurch, unter Verwendung der Steuereinheit des Ventils, Erhöhen der Kondensatoren in den Umrichterzellen des Umrichterventils auf einen zweiten Spannungspegel, der mindestens gleich oder höher als die Spitzenspannungsgröße der Energiequelle ist, wobei die Steuereinheit (140) ausgelegt ist, nur eine geringere Anzahl von Kondensatoren zu verbinden, als erforderlich wäre, um eine Spannung auszugeben, die gleich der Spitzenspannungsgröße ist, so dass die geringere Anzahl von Kondensatoren einer Spannungsgröße ausgesetzt ist, die höher ist als ihre anfängliche kombinierte Spannungsgröße; und,
nach Erreichen des zweiten Spannungspegels, Wiederaufnehmen der normalen Betriebsphase durch Schließen des ersten Stromflusspfades zwischen dem MMC und dem elektrischen Netz mit Hilfe der Verbindungs-/Trennungseinrichtung.

7. MMC-Anordnung nach Anspruch 6, wobei die Größe der endlichen Spannung der Spannungsreferenz ungefähr 80 % der Spitzenspannungsgröße der Stromquelle oder weniger beträgt.

8. MMC-Anordnung nach Anspruch 6 oder 7, wobei die Spannungsreferenz eine Sinuswelle ist, und wobei die endliche Spannung eine Spitzenspannungsgröße der Sinuswelle ist.

9. MMC-Anordnung nach einem der Ansprüche 6 bis 8, wobei der zweite Stromflusspfad einen Strombegrenzungswiderstand (124) enthält.

10. MMC-Anordnung nach einem der Ansprüche 6 bis 9, wobei der zweite Stromflusspfad einen Trenner, Schalter oder Unterbrecher (122) enthält.

11. Umrichterstation, die mindestens eine modulare Multilevel-Umrichter-(MMC)-Anordnung nach einem der Ansprüche 6 bis 10 enthält.

## Revendications

1. Procédé (200) de précharge d'un convertisseur multiniveau modulaire, MMC (100),
le MMC comprenant au moins une valve de convertisseur comprenant une pluralité de cellules de convertisseur comprenant chacune un condensateur ; et une unité (140) de commande de valve configurée pour au moins, pendant une phase de fonctionnement normal lorsque le MMC est connecté à un réseau électrique (130) par l'intermédiaire d'un premier chemin normal (150) de circulation de courant, moduler le convertisseur pour synthétiser une forme d'onde de tension qui approche au moins une référence de tension en contournant et en insérant sélectivement les divers condensateurs des cellules de convertisseur de telle sorte que leurs tensions combinées correspondent à la référence de tension,
le procédé comportant :
l'interruption (S210) du premier chemin de circulation du courant entre le MMC et le réseau électrique ;
la mise en place (S220) d'un second chemin (152) de circulation de courant de substitution entre le MMC et
une source (130, 160) d'alimentation, la source d'alimentation étant le réseau électrique et/ou une alimentation auxiliaire ;
la précharge (S230), via le second chemin de circulation de courant, des condensateurs dans les cellules de convertisseur de la valve de convertisseur jusqu'à un premier niveau de tension inférieur à une amplitude de tension de crête du réseau électrique mais suffisant pour alimenter l'unité de commande de valve ;
après avoir atteint le premier niveau de tension, bloquer d'abord la ou les valves de convertisseur, puis régler (S240) la référence de tension sur une tension finie ayant une amplitude inférieure à l'amplitude de tension de crête de la source d'alimentation et ainsi, à l'aide de l'unité de commande de valve, élever les condensateurs dans les cellules de convertisseur de la valve de convertisseur à un second niveau de tension ayant une amplitude au moins égale ou supérieure à l'amplitude de tension de crête de la source d'alimentation, l'unité (140) de commande de valve étant configurée pour ne connecter qu'un plus faible nombre de condensateurs que celui qui serait nécessaire pour délivrer une tension égale à l'amplitude de tension de crête, de sorte que ledit nombre plus faible de condensateurs est exposé à une amplitude de tension qui est supérieure à leur amplitude de tension combinée initiale ;
et,
après avoir atteint l'amplitude du second niveau de tension, reprendre (S250) la phase de fonctionnement normal en fermant le premier chemin de circulation de courant entre le MMC et le réseau électrique.

2. Procédé selon la revendication 1, la tension finie de la référence de tension étant d'environ 80 % de l'amplitude de tension de crête de la source de puissance ou moins.

3. Procédé selon la revendication 1 ou 2, la référence de tension étant une onde sinusoïdale, et la tension finie étant une amplitude de tension de crête de ladite onde sinusoïdale.

4. Procédé selon l'une quelconque des revendications précédentes, comprenant la mise en place d'une résistance (124) de limitation de courant dans le second chemin de circulation de courant.

5. Procédé selon l'une quelconque des revendications précédentes, comprenant la mise en place d'un sectionneur, d'un interrupteur ou d'un disjoncteur (122) afin d'interrompre le premier chemin de circulation de courant.

6. Agencement (100) de convertisseur modulaire multiniveau, MMC, comprenant :
un MMC (110) comportant au moins une valve de convertisseur comportant une pluralité de cellules de convertisseur connectées en série, chaque cellule de convertisseur comprenant un condensateur et des moyens de commutation servant au moins soit à contourner, soit à insérer ledit condensateur dans un chemin de courant traversant la valve de convertisseur, et une unité (140) de commande de valve configurée pour au moins, lors d'une phase de fonctionnement normal lorsque le MMC est relié à un réseau électrique (130) par l'intermédiaire d'un premier chemin normal (150) de circulation de courant,
moduler la pluralité de cellules de convertisseur en commandant les moyens de commutation pour synthétiser une forme d'onde de tension qui approche au moins une référence de tension en contournant et en insérant sélectivement les divers condensateurs des cellules de convertisseur de telle sorte que leurs tensions combinées correspondent à la référence de tension ;
des moyens (120) de connexion/déconnexion configurés pour fermer et interrompre sélectivement le premier chemin de circulation de courant entre le MMC et un réseau électrique et, au moins lorsque le premier chemin de circulation de courant est interrompu, mettre en place un second chemin (152) de circulation de courant de substitution entre le MMC et une source (130, 160) d'alimentation, la source d'alimentation étant le réseau électrique et/ou un générateur d'alimentation auxiliaire, et
des moyens (140) de commande configurés pour :
interrompre le premier chemin de circulation de courant entre le MMC et le réseau électrique à l'aide desdits moyens de connexion/déconnexion ;
précharger, via le second chemin de circulation de courant, les condensateurs dans les cellules de convertisseur de la valve de convertisseur jusqu'à un premier niveau de tension inférieur à une amplitude de tension de crête du réseau électrique mais toujours suffisant pour alimenter l'unité de commande de valve ;
après avoir atteint le premier niveau de tension, bloquer d'abord la ou les valves de convertisseur, puis régler la référence de tension sur une tension finie ayant une amplitude inférieure à l'amplitude de tension de crête de la source d'alimentation et ainsi, à l'aide de l'unité de commande de valve, élever les condensateurs dans les cellules de convertisseur de la valve de convertisseur à un second niveau de tension au moins égal ou supérieur à une amplitude de tension de crête de la source d'alimentation, l'unité (140) de commande de valve étant configurée pour ne connecter qu'un plus faible nombre de condensateurs que celui qui serait nécessaire pour délivrer une tension égale à l'amplitude de tension de crête, de sorte que ledit nombre plus faible de condensateurs est exposé à une amplitude de tension qui est supérieure à leur amplitude de tension combinée initiale ; et
après avoir atteint le second niveau de tension, reprendre la phase de fonctionnement normal en fermant le premier chemin de circulation de courant entre le MMC et le réseau électrique à l'aide desdits moyens de connexion/déconnexion.

7. Agencement de MMC selon la revendication 6, l'amplitude de la tension finie de la référence de tension étant d'environ 80 % de l'amplitude de tension de crête de la source d'énergie ou moins.

8. Agencement de MMC selon la revendication 6 ou 7, la référence de tension étant une onde sinusoïdale, et la tension finie étant une amplitude de tension de crête de ladite onde sinusoïdale.

9. Agencement de MMC selon l'une quelconque des revendications 6 à 8, le second chemin de circulation de courant comprenant une résistance (124) de limitation de courant.

10. Agencement de MMC selon l'une quelconque des revendications 6 à 9, le second chemin de circulation de courant comprenant un sectionneur, un interrupteur ou un disjoncteur (122).

11. Poste de conversion, comprenant au moins un agencement de convertisseur multiniveau modulaire, MMC, selon l'une quelconque des revendications 6 à 10.
